# EUROPÄISCHE PATENTSCHRIFT

(11) **EP 1 840 407 B1**
(45) Veröffentlichungstag und Bekanntmachung des Hinweises auf die Patenterteilung: **28.04.2010**
(21) Anmeldenummer: 07005656.9
(22) Anmeldetag: 20.03.2007
(51) Int. Cl.: F16F 9/54, F16F 9/06, B60G 13/00

(54) **Stoßdämpfer mit Einbaulagensicherung**
Shock absorbers with mounting position protection
Amortisseur doté d'une protection de position de montage

(30) Priorität: 21.03.2006 DE 202006004598 U
(43) Veröffentlichungstag der Anmeldung: 03.10.2007
(73) Patentinhaber: AL-KO Kober AG, D-89359 Kötz (DE)
(72) Erfinder: Friess, Gerhard, 48340 Amorebieta (ES)
(74) Vertreter: Ernicke, Klaus Stefan

(56) Entgegenhaltungen:
- WO-A-93/17255
- DE-A1- 10 108 686
- DE-B3- 10 359 638
- FR-A1- 2 779 196

## Beschreibung

Die Erfindung betrifft einen Stoßdämpfer mit den Merkmalen im Oberbegriff des Hauptanspruchs.

Hydraulische Stoßdämpfer mit ein oder mehreren Rohren, insbesondere Zweirohrstoßdämpfer, werden bisweilen in vorgeschriebenen Einbaulagen montiert. Bei einem symmetrischen Stoßdärnpferaufbau lässt sich die Einbaulage nicht sicher erkennen, weshalb zur Kennzeichnung entsprechende Etiketten auf dem Stoßdämpfer aufgeklebt werden. Deren nachträgliche Anbringung ist allerdings fehlergefährdet.

Die DE 101 08 686 A1 zeigt eine Befestigungsanordnung für ein Stoßdämpferlager mit einem schräg gestellten Lagerbolzen, der asymmetrische Befestigungsflansche aufweist. Dies dient zur Montage eines Stoßdämpfers in Schräglage an einem Lenker der Radaufhängung. Der zylindrische Lagerbolzen mit den asymmetrischen Flanschen hat keine Sicherungsfunktion und kann verdreht montiert werden, wodurch eine falsche Einbaulage für den Stoßdämpfer entstehen kann.

Aus der DE 103 59 638 B3 ist eine Lagerung für einen Schwingungsdämpfer bekannt. Die Kolbenstange ist mit einer Tragscheibe verbunden, die mittels Befestigungsmitteln starr an der Karosserie befestigt wird. Auf das Stoßdämpferrohr ist eine Außenfeder aufgezogen, die mittels einer Lagerstelle gegenüber dem Zylinderrohr schräg gestellt werden kann.

Die FR 2 779 196 A1 bzw. die parallele DE 198 23 878 C1 offenbart einen zweirohr-Schwinguxxgsdämpfer mit einem Ausgleichselement, bei dem eine Lagerhülse mit einem einseitigen Bund in ein elastisches Lagerkissen eingeführt ist, welches im Auge des Zylinderrohrs montiert ist.

Die WO 93/17255 A1 lehrt ein Bodenventil für einen Stoßdämpfer.

Es ist Aufgabe der vorliegenden Erfindung, einen verbesserten Stoßdämpfer aufzuzeigen.

Die Erfindung löst diese Aufgabe mit den Merkmalen im Hauptanspruch.
Die mechanische Einbaulagensicherung an einem Endstück des Stoßdämpfers vereinfacht die Handhabung und lagerichtige Montage des Stoßdämpfers. Sie sichert die korrekte Einbaulage und Orientierung des Stoßdämpfers bei der Montage und verhindert Einbaufehler. Die Einbaulagensicherung wird herstellerseitig vorgesehen und kann durch eine geeignete Formgestaltung des Stoßdämpfers und ggf. der Lagerung geschaffen werden. Auf Etiketten und dergleichen andere Zusatzteile kann verzichtet werden. Die mechanische Einbaulagensicherung ist selbsterklärend und bedarf keiner schriftlichen Einweisung. Schriftliche Montagehinweise können entfallen. Die mechanische Einbaulagensicherung ist für Monteure international und ohne Sprachenprobleme verständlich.

Vorteilhafterweise wirkt die Einbaulagensicherung mit der Lagerung des Endstücks, vorzugsweise des bodenseitigen Endstücks bzw. Bodenstücks eines Dämpferrohrs, zusammen. Hierdurch kann sofort bei der Lagermontage die Einbaulage unmittelbar überprüft und ggf. korrigiert werden. Hierfür ist es günstig, dass die Einbaulagensicherung am Endstück angeordnet ist.

Bei der mechanischen Einbaulagensicherung besteht außerdem eine feste und unveränderliche Zuordnung zwischen dem Sicherungselement und dem Stoßdämpfer, so dass Beschriftungsfehler oder andere Fehler wie beim Stand der Technik ausgeschlossen sind.

Die mechanische Einbaulagensicherung kann in unterschiedlicher Weise ausgebildet sein. Ein von der normalen Endstückkontur abweichendes und z.B. asymmetrisches Formteil gibt einen sofort erkennbaren und leicht erfassbaren Einbaulagenhinweis. Es verhindert außerdem bei entsprechender Ausgestaltung in Verbindung mit der Lagerung, dass der Stoßdämpfer in der falschen Lage überhaupt montiert werden kann. Ein Sicherungselement oder Formteil in Gestalt einer vorstehenden Nase oder Rippe ist eine besonders einfache Ausgestaltung der Einbaulagensicherung, die wenig Aufwand erfordert und sich auch im Betrieb des Stoßdämpfers nicht nachteilig auswirkt. Eine solche Einbaulagensicherung kann außerdem eine Zusatzfunktion haben und z.B. den Schwenkwinkel des Stoßdämpfers begrenzen.

Bei einem Zweirohrstoßdämpfer empfiehlt sich eine Lagezuordnung der Einbaulagensicherung gegenüber den Durchflussöffnungen des Bodenventils. Diese Lagezuordnung kann über eine Drehlagensicherung zwischen Bodenventil und Ventilsitz am Endstück, insbesondere Bodenstück, zusätzlich abgesichert werden. Vorteilhafterweise sind beide Lagesicherungen am gleichen Bauteil, d.h. am Bodenstück, angeordnet und dort angeformt. Dies schließt Verwechslungen, Fehler beim Zusammenbau des Stoßdämpfers sowie der Stoßdämpfermontage oder dergleichen aus.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:

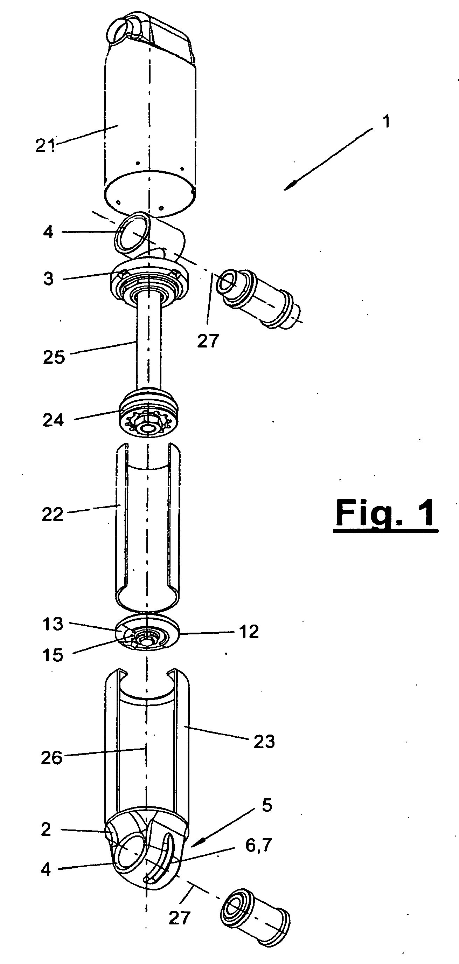

- Figur 1:: einen hydraulischen Stoßdämpfer mit einer Einbaulagensicherung in perspektivischer Explosionsdarstellung,
- Figur 2:: eine Seitenansicht des Stoßdämpfers in schräger Einbaulage mit bodenseitiger Lagerung,
- Figur 3:: eine teilweise aufgebrochene perspektivische Unteransicht eines Bodenstücks und eines Bodenventils des Stoßdämpfers,
- Figur 4:: eine perspektivische Draufsicht auf das Bodenstück,
- Figur 5:: eine teilweise geschnittene Seitenansicht des Bodenstücks und des abgehobenen Bodenventils und
- Figur 6:: eine Draufsicht auf das Bodenstück.

Die Erfindung betrifft einen hydraulischen Dämpfer, insbesondere einen Stoßdämpfer (1) für Fahrzeuge oder dgl., der in unterschiedlicher Weise ausgebildet sein kann. Er kann insbesondere ein oder mehrere Rohre (21,22,23) aufweisen. Die Dämpferbauteile befinden sich im Inneren des hydraulischen Dämpfers (1). Der hydraulische Dämpfer (1) hat eine Außenrohrform, die keine Hinweise auf die Innenanordnung gibt. Er hat z.B. eine im wesentlichen zylindrische Außenrohrform, die über die Rohrlänge gleich bleibt und einen geschlossenen Mantel aufweist. Die Außenrohrform kann sich alternativ über die Länge ändern und dabei im wesentlichen symmetrisch zur Längsachse (26) des hydraulischen Dämpfers (1) sein. Die Querschnittsform kann beliebig, z.B. kreisrund, oval oder prismatisch sein und kann eine Symmetrie bezüglich der Längsachse (26) aufweisen.

In der gezeigten Ausführungsform handelt es sich um einen Zweirohrdämpfer mit einem Arbeitszylinder oder Innenrohr (22), welches von einem Außenrohr (23) mit radialem Abstand konzentrisch umgeben wird. Über das Außenrohr (23) kann ein Schutzrohr (21) gesteckt sein. Im Arbeitszylinder (22) befindet sich ein Kolben (24) mit einem Drosselventil und einem Überströmventil sowie einer Kolbenstange (25). Der Kolben (24) ist am einen Stangenende angeordnet. Am anderen Ende ist die Kolbenstange (25) durch ein mit dem Arbeitszylinder (22) und dem Außenrohr (23) verbundenes Endstück oder Kopfstück (3) verschieblich geführt und weist ein Lagerauge (4) auf.

Bei hydraulischen Stoßdämpfern unterscheiden sich die beidseits des Kolbens (24) angeordneten Kammer- und Ölvolumina durch das Volumen der Kolbenstange (25), welches kompensiert werden soll. Zu diesem Zweck ist am bodenseitigen Ende des Arbeitszylinders (22) ein mit dem dortigen Endstück oder Bodenstück (2) zusammenwirkendes Bodenventil (12) angeordnet, welches ein Überströmen einer dem Kolbenstangenvolumen und der Eintauchtiefe entsprechenden Ölmenge aus dem Arbeitszylinder (22) in den zwischenraum zwischen dem Außenrohr (23) und dem Arbeitszylinder (22) ermöglicht. In diesem nach oben abgeschlossenen Zwischenraum befindet sich außerdem ein ggf. vorgespanntes Gaspolster, welches durch seine Kompressibilität eine Aufnahme der überströmenden ölmengen ermöglicht und andererseits eine Gegenkraft aufbaut. Durch diese Zweirohrtechnik ist der Arbeitszylinder (22) bei allen Kolbenstellungen stets vollkommen mit Hydrauliköl gefüllt.

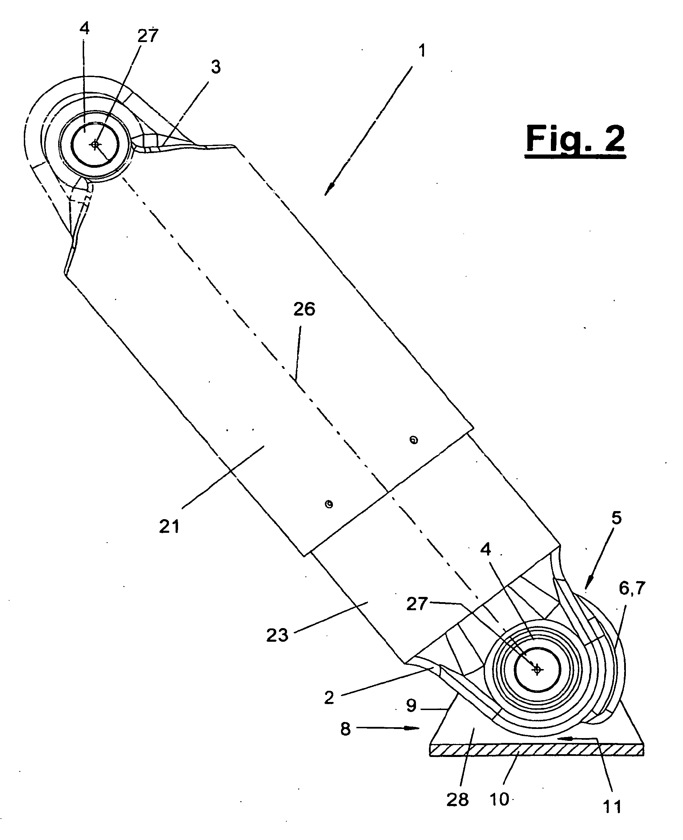

Hydraulische Stoßdämpfer (1) und insbesondere der gezeigte Zweirohrstoßdämpfer werden bisweilen in einer vorgegebenen Einbaulage montiert, die z.B. einen störungsfreien Betrieb ermöglicht. Die Einhaltung einer bestimmten Einbaulage kann auch aus anderen Gründen vorgegeben oder vorteilhaft sein. Hierbei kann z.B. bei Zweirohrstoßdämpfern ein Rückströmen des Gaspolsters oder der Gasblase in den Arbeitszylinder (22) verhindert werden. Hierauf wird nachfolgend noch im einzelnen eingegangen. Figur 2 zeigt die z.B. schräge oder ggf. auch liegende Einbaulage eines solchen hydraulischen Stoßdämpfers (1).

Aus der über die Längsachse (26) im wesentlichen gleich bleibenden oder achssymmetrischen Außenrohrform ist die korrekte Einbaulage nicht ohne weiteres ersichtlich.

Am Bodenteil (2) ist ebenfalls ein Lagerauge (4) für die drehbare Aufnahme an einer bodenseitigen Lagerung (8) vorgesehen. Die Lagerung (8) kann ggf. begrenzte Schwenkbewegungen des Dämpfers (1) um eine quer zu seiner Längsachse (26) verlaufende Lagerachse (27) ermöglichen und besteht z.B. gemäß Figur 2 aus einem Lagerbock (9) mit ein oder zwei seitlichen Lagerarmen (28) zur fliegenden oder beidseitigen Aufnahme einer durch das Lagerauge (4) gesteckten Achse oder Hülse. Der Lagerbock (9) weist eine Bodenplatte (10) auf, die so weit von der Achse (27) des Lagerauges (4) distanziert ist, dass sich für den Betrieb und die dabei auftretenden Schwenkbewegungen des Stoßdämpfers eine ausreichende Lagerluft (11) bzw. ein Lagerspiel und ein Abstand zwischen der Außenseite des Lagerauges (4) bzw. dem umgebenden Mantel des Bodenstücks (2) und der zugekehrten Innenwand der Bodenplatte (10) ergibt.

Um die korrekte Einbaulage und Orientierung des Stoßdämpfers (1) anzuzeigen und darüber hinaus sicherzustellen, weist der hydraulische Stoßdämpfer (1) an mindestens einem Endstück (2,3) eine mechanische Einbaulagensicherung (5) auf. In der gezeigten und bevorzugten Ausführungsform befindet sich die Einbaulagensicherung (5) am bodenseitigen Endstück (2) oder Bodenstück eines Rohrs (21,22,23) und kann mit der Lagerung (8) hemmfähig zusammenwirken. Alternativ kann eine Einbaulagensicherung (5) auch am oberen Endstück oder Kopfstück (3) oder an beiden Endstücken (2,3) angeordnet sein.

Die Einbaulagensicherung (5) kann durch eine Formgebung des Endstücks (2) geschaffen werden, die z.B. mit der Lagerung (8) und insbesondere mit dem Lagerbock (9) zusammenwirkt und darauf abgestimmt ist. Die Lagerung (8) oder der Lagerbock (9) können dabei ebenfalls eine angepasste Formgebung aufweisen. Die Formgebung(en) kann/können asymmetrisch sein. Die Asymmetrie kann sich z.B. auf die Längsachse (26) des Stoßdämpfers (1) oder der Kolbenstange (25) oder die Lagerachse (27) beziehen. Die Einbaulagensicherung (5) kann unterschiedlich ausgebildet und angeordnet sein.

Die Einbaulagensicherung (5) weist z.B. mindestens ein von der normalen Endstückkontur einseitig abweichendes Sicherungselement oder Formteil (6) auf. Das Formteil (6) kann eine asymmetrische Formgebung des Endstücks (2,3) bewirken und z.B. wie in der gezeigten Ausführungsform als nach außen gerichteter Vorsprung (7), insbesondere als Nase oder längliche Rippe am Mantel des Endstücks (2) ausgebildet sein. Der Vorsprung (7) kann hierbei eine Höhe haben, die größer ist als die Lagerluft (11). Das Formteil (6) bzw. der Vorsprung (7) ist dabei asymmetrisch zur Längsachse (26) und zum Lagerauge (4) des Endstücks (2,3) angeordnet. Das Formteil (6) befindet sich z.B. nur an einer Mantelseite des Endstücks (2,3). Durch die Asymmetrie ist die korrekte Einbaulage oder Orientierung des Stoßdämpfers (1) sofort und insbesondere optisch erkennbar.

Die asymmetrische Formgebung bzw. das Formteil (6) kann als reine Anzeige für die korrekte Einbaulage oder Orientierung dienen. Sie kann ferner als ein auf die korrekte Einbaulage bezogener und mit einem Teil der Lagerung (8) zusammenwirkender mechanischer Anschlag ausgebildet sein und nur bei korrekter Einbaulage oder Orientierung des Stoßdämpfers (1) eine Montage ermöglichen. Die Anschlagfunktion kann außerdem zur Begrenzung der Bewegung des Dämpfers (1) in der Lagerung (8) dienen und entsprechend angepasst sein.

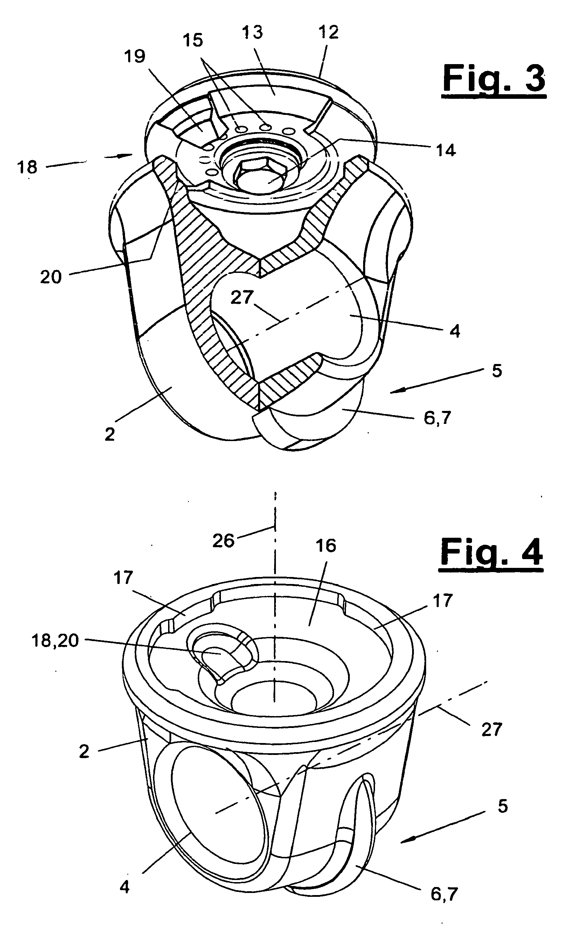

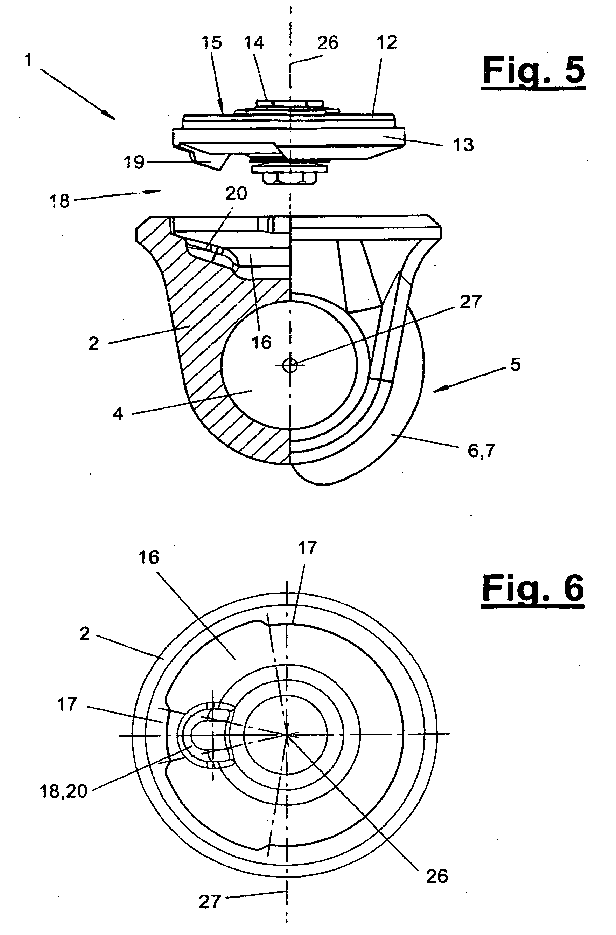

Wie Figur 3 bis 6 verdeutlichen, befindet sich die Rippe (7) an der Außenwandung und dem Mantel des Endstücks (2) oder Bodenstücks und erstreckt sich längs der Mantellinie und am unteren Ende in einem begrenzten Bogen rund und z.B. konzentrisch um das Lagerauge (4). Die Rippe (7) ist etwa in der Mantelmitte des Bodenteils (2) angeordnet und reicht von dessen oberem Ende und dem Anschlussbereich an die Rohre (22,23) bis etwa zum halben Umfang des Lagerauges (4) bzw. bis zur Mitte der Unterseite des Bodenstücks (2). Das Formstück (6) bzw. der Vorsprung (7) befinden sich dabei z.B. an der in der schrägen Einbaulage nach oben weisenden Mantelseite des Bodenstücks (2).

Wie Figur 2 verdeutlicht, kann durch diese Einbaulagensicherung (5) der Stoßdämpfer (1) in seiner schrägen Einbaulage nur dann montiert werden, wenn das Formteil (6) und der Vorsprung (7) sich an der Oberseite und außerhalb des Lagerbereichs befinden. Würde der Stoßdämpfer (1) um 180° verdreht werden, wobei das Formteil (6) bzw. der Vorsprung (7) an der Unterseite des Bodenteils (2) zu liegen kommen, wäre eine Montage nicht möglich. Der Vorsprung (7) würde an der Bodenplatte (10) anschlagen und wegen der begrenzten Lagerluft (11) das Lagerauge (4) so weit nach oben anheben, dass es nicht mehr mit den Aufnahmeöffnungen im Lagerbock (9) fluchtet und somit eine Montage verhindert.

Abwandlungen der gezeigten Ausführungsform der mechanischen Einbaulagensicherung (5) sind in verschiedener Weise möglich. Das Formteil (6) kann z.B. als rinnenartige oder lochartige Vertiefung an der gebogenen Außenwandung bzw. dem Mantel eines Endstücks, insbesondere des Bodenstücks (2), ausgebildet sein und mit einem entsprechenden zapfen oder Höcker an der Lagerung (8) zusammenwirken. In diesem Fall müsste das vertiefte Formteil (6) an der Unterseite des Bodenstücks (2) angeordnet sein, wobei in korrekter Einbaulage der Zapfen oder Höcker formschlüssig in die Rinne oder bohrungsartige Vertiefung eingreift und damit die Montage ermöglicht. Wenn versucht wird, den Stoßdämpfer (1) verdreht in Falschlage einzubauen, drücken der Höcker oder Zapfen gegen die unvertiefte Wandung des Bodenstücks (2), so dass auch in diesem Fall das Lagerauge (4) und der Lagerbock (9) nicht zur Deckung gebracht werden können.

In einer weiteren Abwandlung kann an anderer Stelle des Endstücks (2,3), z.B. seitlich neben dem Lagerauge (4), mindestens ein in Richtung der Lagerachse (27) vorspringendes oder vertieftes Formteil (6) angeordnet sein, welches mit einem anderen Teil der Lagerung (8), z.B. mit einem Lagerarm (28) oder einer Wange des Lagerbocks (9) anschlagmäßig zusammenwirkt. In diesem Fall ist wiederum eine einseitige Anordnung bzw. eine Asymmetrie am Endstück (2,3) vorhanden, um die korrekte Einbaulage zu kennzeichnen bzw. falsche Montagelagen durch mechanisches zusammenwirken zu verhindern. Eine Formanpassung der Lagerung (8) ist hier ebenfalls möglich, z.B. durch unterschiedliche Formgebungen der Lagerarme (28).

Figur 3 bis 6 verdeutlichen die Gestaltung des Bodenventils (12) und des Bodenstücks (2). Das Bodenstück (2) ist z.B. als metallischer Formkörper oder Gusskörper ausgebildet und weist das quer liegende Lagerauge (4) auf, welches als zylindrische Bohrung oder Durchgangskanal ausgebildet ist. Oberhalb des Lagerauges befindet sich ein vertiefter Ventilsitz (16).

Das Bodenventil (12) besitzt eine im wesentlichen kreisrunde Ventilplatte (13), die an geeigneter Stelle, z.B. in der Mitte, ein Drosselventil (14) aufweist. Das Drosselventil (14) lässt die zur Kompensation des Kolbenstangenvolumens erforderliche Ölmenge aus dem unterhalb des Kolbens (24) befindlichen Zylinderraum durchströmen. Das Drosselventil (14) kann hierfür härter eingestellt werden, als das Drosselventil im Kolben (24), um nur diese Kompensationsmenge durchzulassen. Diese kompensierende Ölmenge wird beim Einfahren des Stoßdämpfers (1) bzw. des Kolbens (24) verdrängt. Beim Ausfahren des Stoßdämpfers (1) bzw. Kolbens (24) wird die verdrängte Ölmenge wieder zurück geführt, was weitgehend drosselfrei über Durchflussöffnungen (15) in der ventilplatte (13) und eine beim Rückströmen sich öffnende Rückschlagplatte geschieht.

Die Durchflussöffnungen (15) sind lokal und in einem begrenzten Winkelbereich gegenüber der Zylinder- und Ventillängsachse angeordnet. Sie erstrecken sich z.B. in einem Halbkreis rund um das Drosselventil (14). Im anderen Sektor ist die Ventilplatte (13) massiv ausgebildet. Um ein Rückströmen der in schräger Einbaulage sich an der Oberseite befindlichen Gasblase in den Arbeitszylinder (22) zu verhindern, sind die Durchflussöffnungen (15) an der Unterseite angeordnet. Selbst wenn die Gasblase bis in den Bereich des Bodenventils (12) gelangen sollte, kann sie wegen ihres Auftriebs nicht so weit nach unten wandern, dass sie durch die Durchflussöffnungen (15) gelangt.

Zwischen der Anordnung der Durchflussöffnungen (15) in der vorgesehenen schrägen Einbaulage und der mechanischen Einbaulagensicherung (5) gibt es eine Beziehung. Die Einbaulagensicherung (5) ist so angeordnet und ausgebildet, dass diese gewünschte bodenseitige Lage der Durchflussöffnungen (15) gewährleistet ist.

Andererseits ist eine Drehlagensicherung (18) vorgesehen, um zwischen dem Bodenstück (2) und dem Bodenventil (12) die korrekte Zuordnung und Einbaulage sicherzustellen. Hierdurch ist dann auch die richtige Beziehung zur Einbaulagensicherung (5) gewährleistet. Die Drehlagensicherung (18) kann z.B. ebenfalls als formschlüssige mechanische Sicherung ausgebildet sein. Hierfür ist z.B. an der Unterseite der Ventilplatte (13) lokal eine vorspringende Nase (19) und an der lagerichtig zugehörigen Stelle am Ventilsitz (16) im Bodenstück (2) eine entsprechende Vertiefung (20) angeordnet.

Das Bodenstück (2) weist an seiner zu den Rohren (22,23) gewandten Stirnseite den kegelförmig vertieften Ventilsitz (16) zur Aufnahme und zentrierenden Führung des Bodenventils (12) auf. Der Ventilsitz (16) bietet unterhalb der Ventilplatte (13) eine Wanne zur Aufnahme und Umleitung der Kompensations-Ölmenge. An der den Ventilsitz (16) umgebenden ringförmigen Wandung ist eine Zentrierung (17) mit Ausnehmungen angeordnet, welche durch den Arbeitszylinder (22) führt und ein Überströmen der kompensierenden Ölmenge in den umfangsseitigen Zwischenraum zu dem ebenfalls an dem Bodenstück (2) geführten und abgestützten Außenrohr (23) ermöglicht.

Abwandlungen der beschriebenen Ausführungsformen sind in verschiedener Weise möglich. Dies betrifft die Ausbildung und Anordnung der Einbaulagensicherung (5) sowie die Ausgestaltung und Anordnung des Stoßdämpfers (1). Der Stoßdämpfer (1) kann in der in Figur 2 gezeigten schrägen Einbaulage um das untere Lagerauge (4) drehen. Der Drehwinkel kann nach ein oder beiden Richtungen durch die Einbaulagensicherung (5) oder auf andere Weise begrenzt werden.

Variabel sind die konstruktive Gestaltung und die Kinematik der Lagerung (8) und des Endstücks (2,3). Z.B. kann statt einer Schwenklagerung eine Schiebelagerung oder eine Festlagerung vorhanden sein. Die Lagerung (8) muss auch nicht beweglich sein. Abwandelbar sind ferner die sonstige konstruktive Gestaltung und der Einsatzbereich des Dämpfers (1).

Die Merkmale der gezeigten und beschriebenen Ausführungsbeispiele können auch beliebig untereinander vertauscht und kombiniert werden.

### BEZUGSZEICHENLISTE

- 1: Stossdämpfer
- 2: Endstück, Bodenstück
- 3: Endstück, Kopfstück
- 4: Lagerauge
- 5: Lagensicherung, Einbaulagensicherung
- 6: Formteil
- 7: Vorsprung, Nase, Rippe
- 8: Lagerung
- 9: Lagerbock
- 10: Bodenplatte
- 11: Lagerluft
- 12: Bodenventil
- 13: Ventilplatte
- 14: Drosselventil
- 15: Durchflussöffnung
- 16: Ventilsitz
- 17: Zentrierung
- 18: Lagensicherung, Drehlagensicherung
- 19: Nase
- 20: Vertiefung
- 21: Schutzrohr
- 22: Arbeitszylinder, Innenrohr
- 23: Außenrohr
- 24: Kolben
- 25: Kolbenstange
- 26: Längsachse
- 27: Lagerachse
- 28: Lagerarm

## Patentansprüche

1. Hydraulischer Dämpfer (1), insbesondere Stoßdämpfer, mit ein oder mehreren Rohren (21,22,23) und mit mindestens einem mit einer Lagerung (8), insbesondere einer Schwenklagerung, verbindbaren Endstück (2,3), wobei der Dämpfer (1) an mindestens einem Endstück (2,3) eine mechanische Einbaulagensicherung (5) für die korrekte Einbaulage und Orientierung des Dämpfers (1) aufweist, die mit der Lagerung (8) zusammenwirkt, **dadurch gekennzeichnet, dass** das Endstück (2,3) zur Bildung der Einbaulagensicherung (5) eine asymmetrische Formgebung aufweist.

2. Stoßdämpfer nach Anspruch 1, **dadurch gekennzeichnet, dass** die Lagerung (8) eine an die Asymmetrie des Endstücks (2,3) angepasste Formgebung aufweist.

3. Stoßdämpfer nach Anspruch 1 oder 2, **dadurch gekennzeichnet, dass** die asymmetrische Formgebung des Endstücks (2,3) als ein auf die korrekte Einbaulage bezogener und mit einem Teil der Lagerung (8) zusammenwirkender Anschlag ausgebildet ist.

4. Stoßdämpfer nach Anspruch 1, 2 oder 3,**dadurch gekennzeichnet, dass** die asymmetrische Formgebung des Endstücks (2,3) als Anschlag zur Begrenzung der Dämpferbewegung in der Lagerung (8) ausgebildet ist.

5. Stoßdämpfer nach einem der vorhergehenden Ansprüche, **dadurch gekennzeichnet, dass** das Endstück (2,3) mindestens ein bezüglich der Längsachse (26) und/oder der Lagerachse (27) asymmetrisch angeordnetes Formteil (6) aufweist.

6. Stoßdämpfer nach Anspruch 5, **dadurch gekennzeichnet, dass** das Formteil (6) als Vorsprung (7), insbesondere als Nase oder Rippe ausgebildet ist.

7. Stoßdämpfer nach Anspruch 6, **dadurch gekennzeichnet, dass** der Vorsprung (7) eine Höhe aufweist, die größer als die Lagerluft (11) ist.

8. Stoßdämpfer nach Anspruch 6 oder 7, **dadurch gekennzeichnet, dass** der Vorsprung (7) auf der in schräger Einbaulage oben befindlichen Seite des bodenseitigen Endstücks (2) angeordnet ist.

9. Stoßdämpfer nach Anspruch 6, 7 oder 8, **dadurch gekennzeichnet, dass** der Vorsprung (7) sich längs des Bodenstückmantels erstreckt.

10. Stoßdämpfer nach einem der vorhergehenden Ansprüche, **dadurch gekennzeichnet, dass** der Stoßdämpfer (1) als Zweirohrdämpfer ausgebildet ist und ein Bodenventil (12) mit Durchflussöffnungen (15) aufweist, die in schräger Einbaulage unten liegen.

11. Stoßdämpfer nach Anspruch 10, **dadurch gekennzeichnet, dass** die Durchflussöffnungen (15) und der Vorsprung (7) gegenüberliegend angeordnet sind.

12. Stoßdämpfer nach Anspruch 10 oder 11, **dadurch gekennzeichnet, dass** das Bodenventil (12) eine Drehlagensicherung (18) aufweist.

13. Stoßdämpfer nach einem der vorhergehenden Ansprüche, **dadurch gekennzeichnet, dass** das bodenseitige Endstück (2) einen Ventilsitz (16) zur Abstützung des Bodenventils (12) aufweist.

14. Stoßdämpfer nach Anspruch 13, **dadurch gekennzeichnet, dass** die Drehlagensicherung (18) von formschlüssig ineinander greifenden Nase (19) und Vertiefung (20) am Bodenventil (12) und am Ventilsitz (16) gebildet ist.

15. Stoßdämpfer nach Anspruch 13 oder 14, **dadurch gekennzeichnet, dass** der Ventilsitz (16) eine Zentrierung (17) für das Bodenventil (12) und einen Arbeitszylinder (22) aufweist.

## Claims

1. Hydraulic damper (1), in particular shock damper, with one or more tubes (21, 22, 23) and with at least one end-piece (2, 3), which can be connected to a support (8), in particular a pivoting support, the damper (1) having, on at least one end-piece (2, 3), a mechanical installation-position locating means (5) for the correct installation position and orientation of the damper (1), the said locating means interacting with the support (8), **characterized in that** the end-piece (2, 3) has an asymmetrical shape to form the installation-position locating means (5).

2. Shock damper according to Claim 1, **characterized in that** the support (8) has a shape matched to the asymmetry of the end-piece (2, 3).

3. Shock damper according to Claim 1 or 2, **characterized in that** the asymmetrical shape of the end-piece (2, 3) is designed as a stop which is related to the correct installation position and interacts with a part of the support (8).

4. Shock damper according to Claim 1, 2 or 3, **characterized in that** the asymmetrical shape of the end-piece (2, 3) is designed as a stop for limiting the movement of the damper in the support (8).

5. Shock damper according to one of the preceding claims, **characterized in that** the end-piece (2, 3) has at least one shaped part (6), which is arranged asymmetrically with respect to the longitudinal axis (26) and/or the support axis (27).

6. Shock damper according to Claim 5, **characterized in that** the shaped part (6) is designed as a projection (7), in particular as a nose or rib.

7. Shock damper according to Claim 6, **characterized in that** the height of the projection (7) is greater than the support clearance (11).

8. Shock damper according to Claim 6 or 7, **characterized in that** the projection (7) is arranged on that side of the bottom end-piece (2) which is at the top in an oblique installation position.

9. Shock damper according to Claim 6, 7 or 8, **characterized in that** the projection (7) extends along the lateral surface of the bottom piece.

10. Shock damper according to one of the preceding claims, **characterized in that** the shock damper (1) is designed as a twin-tube damper and has a bottom valve (12) with throughflow openings (15) which are situated at the bottom in an oblique installation position.

11. Shock damper according to Claim 10, **characterized in that** the throughflow openings (15) and the projection (7) are arranged opposite one another.

12. Shock damper according to Claim 10 or 11, **characterized in that** the bottom valve (12) has a rotational-position locating means (18).

13. Shock damper according to one of the preceding claims, **characterized in that** the bottom end-piece (2) has a valve seat (16) for supporting the bottom valve (12).

14. Shock damper according to Claim 13, **characterized in that** the rotational-position locating means (18) is formed by a positively interlocking nose (19) and a depression (20) on the bottom valve (12) and on the valve seat (16).

15. Shock damper according to Claim 13 or 14, **characterized in that** the valve seat (16) has a centring means (17) for the bottom valve (12) and a working cylinder (22).

## Revendications

1. Amortisseur hydraulique (1), notamment amortisseur de chocs, comprenant un ou plusieurs tubes (21, 22, 23) et au moins un embout (2, 3) pouvant être assemblé à un support sur palier (8), notamment un support sur palier pivotant, l'amortisseur (1) présentant, au niveau d'au moins un embout (2, 3), une fixation mécanique dans la position de montage (5) pour la position de montage et l'orientation correctes de l'amortisseur (1), laquelle coopère avec le support sur palier (8), **caractérisé en ce que** l'embout (2, 3) présente une forme asymétrique pour former la fixation dans la position de montage (5).

2. Amortisseur de chocs selon la revendication 1, **caractérisé en ce que** le support sur palier (8) présente une forme adaptée à l'asymétrie de l'embout (2, 3).

3. Amortisseur de chocs selon la revendication 1 ou 2, **caractérisé en ce que** la forme asymétrique de l'embout (2, 3) est réalisée sous forme de butée rapportée à la position de montage correcte et coopérant avec une partie du support sur palier (8).

4. Amortisseur de chocs selon la revendication 1, 2 ou 3, **caractérisé en ce que** la forme asymétrique de l'embout (2, 3) est réalisée sous forme de butée pour limiter le mouvement d'amortissement dans le support sur palier (8).

5. Amortisseur de chocs selon l'une quelconque des revendications précédentes, **caractérisé en ce que** l'embout (2, 3) présente au moins une pièce moulée (6) disposée de manière asymétrique par rapport à l'axe longitudinal (26) et/ou à l'axe de palier (27).

6. Amortisseur de chocs selon la revendication 5, **caractérisé en ce que** la pièce moulée (6) est réalisée sous forme de saillie (7), notamment sous forme de nez ou de nervure.

7. Amortisseur de chocs selon la revendication 6, **caractérisé en ce que** la saillie (7) présente une hauteur qui est supérieure au jeu dans le palier (11).

8. Amortisseur de chocs selon la revendication 6 ou 7, **caractérisé en ce que** la saillie (7) est disposée du côté de l'embout (2) du côté du fond, se trouvant en haut dans la position de montage oblique.

9. Amortisseur de chocs selon la revendication 6, 7 ou 8, **caractérisé en ce que** la saillie (7) s'étend le long de l'enveloppe de la pièce de fond.

10. Amortisseur de chocs selon l'une quelconque des revendications précédentes, **caractérisé en ce que** l'amortisseur de chocs (1) est réalisé sous forme d'amortisseur à deux tubes, et présente une soupape de fond (12) avec des ouvertures de passage (15) qui sont situées en bas dans la position de montage oblique.

11. Amortisseur de chocs selon la revendication 10, **caractérisé en ce que** les ouvertures de passage (15) et la saillie (7) sont disposées en regard les unes des autres.

12. Amortisseur de chocs selon la revendication 10 ou 11, **caractérisé en ce que** la soupape de fond (12) présente une fixation en position de rotation (18).

13. Amortisseur de chocs selon l'une quelconque des revendications précédentes, **caractérisé en ce que** l'embout (2) du côté du fond présente un siège de soupape (16) pour supporter la soupape de fond (12).

14. Amortisseur de chocs selon la revendication 13, **caractérisé en ce que** la fixation en position de rotation (18) est formée par un nez (19) et un renfoncement (20) s'engageant par engagement par coopération de forme l'un dans l'autre sur la soupape de fond (12) et sur le siège de soupape (16).

15. Amortisseur de chocs selon la revendication 13 ou 14, **caractérisé en ce que** le siège de soupape (16) présente un centrage (17) pour la soupape de fond (12) et un cylindre de travail (22).
